# EUROPÄISCHE PATENTSCHRIFT

(11) **EP 3 013 548 B1**
(45) Veröffentlichungstag und Bekanntmachung des Hinweises auf die Patenterteilung: **04.09.2019**
(21) Anmeldenummer: 14744447.5
(22) Anmeldetag: 24.06.2014
(51) Int. Cl.: B29C 45/17, B29C 45/72, B29C 49/46, B29C 49/58, B29C 49/60

(54) **FLUIDINJEKTOR UND VERFAHREN ZUR HERSTELLUNG VON HOHLKÖRPERN MITTELS FLUIDINJEKTIONSTECHNIK**
FLUID INJECTOR AND METHOD OF PRODUCING HOLLOW BODIES BY MEANS OF FLUID-INJECTION TECHNOLOGY
INJECTEUR DE FLUIDE ET PROCÉDÉ DE FABRICATION DE CORPS CREUX PAR LA TECHNIQUE D'INJECTION DE FLUIDE

(30) Priorität: 24.06.2013 DE 102013010421; 16.10.2013 DE 102013221019
(43) Veröffentlichungstag der Anmeldung: 04.05.2016
(73) Patentinhaber: Westphal, Friedrich, 79361 Sasbach (DE)
(72) Erfinder: Westphal, Friedrich, 79361 Sasbach (DE)
(74) Vertreter: Geitz Truckenmüller Lucht Christ
(86) Internationale Anmeldenummer: PCT/DE2014/100209
(87) Internationale Veröffentlichungsnummer: WO 2014/206398

(56) Entgegenhaltungen:
- EP-A1- 1 775 096
- WO-A2-2004/113048
- JP-A- 2001 310 356
- US-A- 3 694 424
- JUN SEOK LEE ET AL: "THE EFFECT OF LIQUID COOLING OF GAS CHANNEL IN THE GASASSISTED INJECTION MOLDING PROCESS: OVERVIEW", INTERNET CITATION, 7. Juni 2001 (2001-06-07), XP002409662, Gefunden im Internet: URL:http://www.knovel.com/knovel2/Toc.jsp? BookID=295&VerticalID=0 [gefunden am 2006-11-29]

## Beschreibung

Die Erfindung geht aus von einem Fluidinjektor zur Herstellung von Hohlkörpern mittels Fluidinjektionstechnik.

Bei Verfahren und Vorrichtungen der Fluidinjektionstechnik werden hohle Kunststoffkörper durch Einleiten mindestens eines Fluids unter Druck in eine noch fließfähige Formmasse hergestellt. Dabei wird beispielsweise zunächst eine noch flüssige Kunststoffschmelze in eine Spritzgießform eingeleitet und anschließend ein von der Kunststoffschmelze abweichendes Fluid unter Druck in die Kunststoffschmelze eingeführt um die Schmelze in der Spritzgießform zu verteilen und gleichzeitig einen Hohlraum in der Kunststoffschmelze auszubilden. Als Fluid wird eine Flüssigkeit oder ein Gas eingesetzt. Verfahren, bei denen als Flüssigkeit Wasser verwendet wird, werden als Verfahren der Wasserinjektionstechnik bezeichnet. Verfahren, bei denen ein Gas eingesetzt wird, werden als Verfahren der Gasinjektionstechnik bezeichnet. Verfahren mit kombiniertem Einsatz der Gas- und Wasserinjektionstechnik weisen eine Nebelkühlung auf. Nach der Abkühlung des Bauteils auf eine vorgegebene Temperatur wird die Spritzgießform geöffnet und das Bauteil entnommen. Anschließend kann das nächste Bauteil hergestellt werden. Der Zyklus beginnt erneut mit dem Befüllen der Spritzgießform mit flüssiger Kunststoffschmelze.

Fluidinjektoren welche bei einer Kombination aus Gas- und Wasserinjektionstechnik zum Einsatz kommen, leiten mindestens zwei Fluide in ein Spritzgießwerkzeug ein, ein gasförmiges und ein flüssiges. Ziel ist es dabei, die Fluide möglichst kontrolliert zuzuführen, um reproduzierbare Ergebnisse zu erhalten und die Kühlwirkung optimal auszunutzen.

Darüber hinaus werden Fluidinjektoren beim Blasformen, Englisch Blow Molding, und bei der Hohlkörperextrusion eingesetzt.

Die EP 1 775 096 A1 offenbart ein Verfahren zur Herstellung spritzgegossener Formteile mit mindestens einem Hohlraum aus thermoplastischem Kunststoff. Hierzu wird eine Kunststoffschmelze in die Kavität eines Spritzgießwerkzeugs eingespritzt und anschließend in die flüssige Schmelze ein gasförmiges Fluid und ein Kühlmedium, vorzugsweise Wasser, eingeleitet. Dabei werden in einem Ventil oder einer Mischdüse Gas und Wasser vor der Einspritzung zusammengebracht. Das Gas zieht das Wasser nach dem Venturi-Effekt ein.

Aus Jun Seok Lee et al., The effect of liquid cooling of gas channel in the gasassisted injection molding process: overview, 07. Juni 2001, XP002409662, sind ein Verfahren und eine Vorrichtung zum Gas-unterstützten Spritzgießen bekannt. Dabei wird Wasser zur Kühlung eingesetzt. Mittels des Venturi-Effektes wird das Wasser mit einem strömenden Gas vor dem Einleiten in die Kunststoffschmelze vermischt. Der Zeitpunkt der Gaseinspritzung wird von einer Steuerung koordiniert.

Aus der US 3,694,424 A ist eine einstellbare Wasserspeiseleitung und eine einstellbare Luftleitung zur Erzeugung eines Wasser-Luft-Gemisches zur Kühlung eines aufgeblasenen Hohlkörpers bei einem Blasformverfahren bekannt. Zur Einstellung des Mischverhältnisses des Wasser-Luft-Gemisches ist eine Mischkammer vorgesehen. Das Wasser-Luft-Gemisch wird durch eine Zuleitung geführt, welche parallel zu der Zuleitung der Blasluft verläuft. Der Auslass des Wasser-Luft-Gemisches und der Auslass der Blasluft sind benachbart zueinander angeordnet. Das Wasser-Luft-Gemisch welches den Hohlkörper kühlt, wird nach dem Aufblasen des Hohlkörpers mit Blasluft in den Hohlkörper eingeleitet.

Der Erfindung liegt die Aufgabe zugrunde einen Fluidinjektor zur Verfügung zu stellen, der die Erzeugung eines mehrphasigen Gemischs in Form eines zerstäubten Nebels mit einer definierten Kühlwirkung ermöglicht.

Diese Aufgabe wird durch einen Fluidinjektor mit den Merkmalen des Anspruchs 1 gelöst. Der Fluidinjektor weist einen Injektorkörper mit einem Injektorkörper-Kanal und einer in dem Injektorkörper-Kanal angeordnete Injektornadel auf. Die Injektornadel kann eine feste Position aufweisen oder in dem Injektorkörper-Kanal in Längsrichtung verschiebbar angeordnet sein. Die Injektornadel ist bevorzugt länglich. Sie ist mit ihrer Längachse parallel zur Längsrichtung des Injektorkörper-Kanals angeordnet. Der Außendurchmesser der Injektornadel ist kleiner als der Innendurchmesser des Injektorkörper-Kanals, so dass sich ein Ringspalt ausbildet, durch welchen ein erstes Fluid strömen kann. Die Injektornadel weist ihrerseits einen länglichen Injektornadel-Kanal auf, der sich parallel zu dem Injektorkörper-Kanal erstreckt. In bevorzugter Weise verläuft der Injektornadel-Kanal koaxial zu dem Injektorkörper-Kanal. Durch den Injektornadel-Kanal kann ein zweites Fluid parallel zu dem ersten Fluid strömen, so dass das erste und das zweite Fluid zeitgleich aus dem Fluidinjektor austreten.

Eines der beiden Fluide ist beim Strömen durch den Fluidinjektor gasförmig und das andere flüssig. So kann das erste Fluid beispielsweise gasförmig sein und das zweite flüssig oder umgekehrt.

Der Injektorkörper-Kanal weist einen Einlass und einen Auslass für ein erstes Fluid auf. Der Injektornadel-Kanal weist einen Einlass und einen Auslass für ein zweites Fluid auf. Der Injektorkörper-Auslass und der Injektornadel-Auslass sind unmittelbar benachbart zueinander angeordnet, so dass im Bereich des Injektorkörper-Auslasses und des Injektornadel-Auslasses eine Vermischung des ersten und zweiten Fluids stattfindet. Dabei wird das flüssige der beiden Fluide zerstäubt. Es entsteht ein mehrphasiges Gemisch in Form eines zerstäubten Nebels. Dieser Nebel wird in eine noch fließfähige Formmasse eingeleitet. Es handelt sich bei dem Gemisch insbesondere um ein zweiphasiges Gemisch. Bis zum Injektorkörper-Auslass und zum Injektornadel-Auslass werden das erste Fluid und das zweite Fluid getrennt voneinander geführt.

Da der Fluidinjektor einen definierten Nebel in vorgegebener Zusammensetzung aus einem ersten und einem zweiten Fluid erzeugt, wird er auch als Dosierinjektor bezeichnet.

Nach einer vorteilhaften Ausgestaltung der Erfindung weist der Injektornadel-Kanal an dem Injektornadel-Auslass eine Querschnittsverengung auf. Sie sorgt dafür, dass der Injektornadel-Kanal im Bereich des Injektornadel-Auslasses wie eine Venturi-Düse wirkt. Dabei stellt der Injektorkörper-Kanal das Abnahmerohr dar, das im Bereich der Querschnittsverengung mündet. Durch die Querschnittsverengung wird die Strömungsgeschwindigkeit erhöht. Die daraus entstehende Druckdifferenz sorgt für das Ansaugen des ersten Fluids aus dem Injektorkörper-Kanal. Dadurch wird die Entstehung eines mehrphasigen Gemischs in Form eines zerstäubten Nebels begünstigt.

Nach einer weiteren vorteilhaften Ausgestaltung der Erfindung weist der Injektorkörper-Kanal an dem Injektorkörper-Auslass eine Querschnittsverengung auf. Diese Querschnittsverengung kann alternativ oder kumulativ zu der Querschnittsverengung des Injektornadel-Kanals am Injektornadel-Auslass vorgesehen sein. Sie sorgt ebenfalls für eine Erhöhung der Strömungsgeschwindigkeit und eine Druckdifferenz. In diesem Fall wirkt der Injektorkörper-Kanal wie eine Venturi-Düse, wodurch wiederum die Entstehung eines mehrphasigen Gemischs in Form eines zerstäubten Nebels begünstigt wird. Darüber hinaus wird durch die Querschnittsverengung des Injektorkörper-Kanals am Injektorkörper-Auslass das Verschließen des Injektorkörper-Auslasses durch eine axial verschiebbare Injektornadel ermöglicht.

Nach einer weiteren vorteilhaften Ausgestaltung der Erfindung weist der Injektornadel-Auslass mehrere Kanäle auf, wobei jeder Kanal einen kleineren Querschnitt hat als der Injektornadel-Kanal. Dadurch wird eine Querschnittsverengung erreicht.

Nach einer weiteren vorteilhaften Ausgestaltung der Erfindung ist der Injektornadel-Auslass als eine oder mehrere Düsen ausgebildet. Dadurch können Strömungsmuster variiert werden.

Nach einer weiteren vorteilhaften Ausgestaltung der Erfindung weist die Injektornadel an dem Injektornadel-Auslass ein offenzelliges oder offenporiges Material auf. Die Poren oder Zellen des Materials bilden gemeinsam einen Injektornadel-Auslass.

Nach einer weiteren vorteilhaften Ausgestaltung der Erfindung ist die Injektornadel in dem Injektorkörper-Kanal in Längsrichtung verschiebbar angeordnet. Dies kann auch als Verschiebung in axialer Richtung bezeichnet werden.

Nach einer weiteren vorteilhaften Ausgestaltung der Erfindung weist die Injektornadel eine im Injektornadel-Kanal in Längsrichtung verschiebbare Verschlussnadel auf. Dies kann auch als Verschiebung in axialer Richtung bezeichnet werden.

Nach einer weiteren vorteilhaften Ausgestaltung der Erfindung weist die Verschlussnadel einen zylindrischen ersten Abschnitt auf, dessen Außendurchmesser kleiner ist als der Innendurchmesser des Injektornadel-Kanals, wobei sich zwischen der Injektornadel und der Verschlussnadel ein Ringspalt ausbildet. Ferner weist die Verschlussnadel einen zweiten als Schließkörper ausgebildeten Abschnitt auf, der in Schließstellung den Injektornadel-Auslass verschließt. Die Positionierung der Verschlussnadel im Injektornadel-Kanal bestimmt die Verengung des Durchlasses zwischen Injektornadel-Kanal und Injektornadel. Ferner kann verhindert werden, dass fließfähige Frommasse in den Injektornadel-Kanal eindringt.

Nach einer weiteren vorteilhaften Ausgestaltung der Erfindung ist der Injektornadel-Kanal an dem Injektornadel-Auslass in Strömungsrichtung konisch aufgeweitet. Die Verschlussnadel ist an ihrem Ende an dem Injektornadel-Auslass ebenfalls in Strömungsrichtung konisch aufgeweitet. Dabei ist der Injektornadel-Auslass als Ventilsitz für das konisch aufgeweitete Ende der Verschlussnadel ausgebildet.

Nach einer weiteren vorteilhaften Ausgestaltung der Erfindung verjüngt sich die Verschlussnadel in Strömungsrichtung.

Nach einer weiteren vorteilhaften Ausgestaltung der Erfindung weist die Verschlussnadel einen zylindrischen Abschnitt an der Spitze auf. Der Injektornadel-Kanal weist einen entsprechenden zylindrischen Abschnitt auf, welcher in einer Schließstellung der Verschlussnadel durch den zylindrischen Abschnitt der Verschlussnadel verschlossen ist.

Nach einer weiteren vorteilhaften Ausgestaltung der Erfindung weist der Fluidinjektor einen pneumatischen oder hydraulischen Antrieb zum Verschieben der Injektornadel und/ oder der Verschlussnadel auf. Dadurch kann der Injektorkörper-Auslass oder der Injektornadel-Auslass geöffnet und geschlossen werden. Ferner kann eine Zuleitung für ein erstes Fluid oder eine Zuleitung für ein zweites Fluid geöffnet und geschlossen werden.

Nach einer weiteren vorteilhaften Ausgestaltung der Erfindung ist die Injektornadel an ihrem dem Injektornadel-Auslass abgewandten Ende mit einem Kolben ausgestattet. Der Fluidinjektor weist einen hydraulischen oder pneumatischen Zylinder auf, in welchem der Kolben verschiebbar geführt ist. An den Injektorkörper-Einlass ist eine Zuleitung für ein erstes Fluid gekoppelt. Ferner ist an den Injektornadel-Einlass eine Zuleitung für ein zweites Fluid gekoppelt. Die Zuleitung für das erste und/ oder das zweite Fluid ist mit einer Dosiereinrichtung ausgestattet. An den Zuleitungen können Drucksensoren angeordnet sein.

Nach einer vorteilhaften Ausgestaltung der Erfindung ist in dem Injektorkörper-Kanal eine Injektornadel in Längsrichtung verschiebbar geführt. Da der Innendurchmesser des Injektorkörper-Kanals größer ist als der Durchmesser der Injektornadel, besteht zwischen dem Injektorkörper-Kanal und der Injektornadel ein Ringspalt.

Nach einer weiteren vorteilhaften Ausgestaltung der Erfindung ist der Injektorkörper-Auslass als mindestens eine Düse ausgebildet.

Nach einer weiteren vorteilhaften Ausgestaltung der Erfindung ist an der ersten Zuleitung und/ oder an der zweiten Zuleitung ein Drucksensor angeordnet, der den Druck in der ersten und/ oder zweiten Zuleitung erfasst.

Nach einer weiteren vorteilhaften Ausgestaltung der Erfindung ist die zweite Zuleitung mit einem Ventil ausgestattet. Das Ventil ist in Abhängigkeit von dem Messwert des mindestens einen Drucksensors geregelt.

Nach einer weiteren vorteilhaften Ausgestaltung der Erfindung ist die zweite Zuleitung mit einem Zylinder mit Kolben ausgestattet. Mit dem in dem Zylinder geführten Kolben wird ein Druck des zweiten Fluids in der zweiten Zuleitung aufgebaut.

Nach einer weiteren vorteilhaften Ausgestaltung der Erfindung ist der Fluidinjektor mit einer Leitung ausgestattet, über welche das mehrphasige Gemisch und/ oder der erste Fluid und/ oder das zweite Fluid nach dem Erzeugen eines Hohlraums in einer Formmasse und nach dem Abkühlen der Formmasse ableitbar und der erzeugte Druck in der abgekühlten Formmasse abbaubar ist.

Das erfindungsgemäße Verfahren mit den Merkmalen des Anspruchs 11 zeichnet sich dadurch aus, dass aus einem gasförmigen ersten Fluid und einem flüssigen zweiten Fluid ein mehrphasiges Gemisch in Form eines zerstäubten Nebels erzeugt wird, und dass der Nebel in eine Formmasse, beispielsweise eine Kunststoffschmelze oder einen Vorformling eingeleitet und ein Hohlraum in der Kunststoffschmelze oder dem Vorformling in einem formgebenden Werkzeug erzeugt wird. Dabei hat der Nebel auch eine kühlende Wirkung.

Ein erster Einsatzbereich des Fluidinjektors und des Verfahrens ist das Einleiten des Nebels in eine noch formbare Formmasse beispielsweise bei einem Spritzgussverfahren, bei einem Aufblasverfahren, bei einem Ausblasverfahren, bei einem Kernzugverfahren, bei einem Nebenkavität-Verfahren, bei einem Masserückdrückverfahren und bei einem Teilfüllung-Verfahren. Das hierbei eingesetzte Formwerkzeug kann eine oder mehrere Kavitäten aufweisen.

Das erfindungsgemäße Verfahren und der erfindungsgemäße Fluidinjektor können in einem weiteren Einsatzbereich beim Blasformen angewendet werden. Dabei wird ein Vorformling in einem formgebenden Werkzeug aufgeblasen. Der Nebel wird beim Aufblasen in den Vorformling eingeleitet. Er sorgt damit für ein gezieltes Aufblasen und Formen des Kunststoff-Hohlkörpers und für eine schnelle Abkühlung des Formlings.

Das erfindungsgemäße Verfahren und der erfindungsgemäße Fluidinjektor können in einem weiteren Einsatzbereich bei der Hohlkörperextrusion eingesetzt werden. Das Einleiten des Nebels in den Hohlkörper sorgt für eine gute Formgebung und eine schnelle Abkühlung.

Weitere Vorteile und vorteilhafte Ausgestaltungen der Erfindung sind der nachfolgenden Beschreibung, der Zeichnung und den Ansprüchen entnehmbar.

### Zeichnung

Ausführungsbeispiele der Erfindung sind in der Zeichnung dargestellt und im folgenden näher beschrieben. Es zeigen:
- Figur 1: nicht erfindungsgemäßer Injektor,
- Figur 2: erstes Ausführungsbeispiel eines Fluidinjektors,
- Figur 3: zweites Ausführungsbeispiel eines Fluidinjektors,
- Figur 3a: Ausschnitt aus Figur 3
- Figur 4: drittes Ausführungsbeispiel eines Fluidinjektors,
- Figur 4a: Ausschnitt aus Figur 4,
- Figur 5: viertes Ausführungsbeispiel eines Fluidinjektors,
- Figur 6: nicht erfindungsgemäßer Injektor,
- Figur 7: fünftes Ausführungsbeispiel eines Fluidinjektors,
- Figur 7a: Ausschnitt aus Figur 7,
- Figur 8: sechstes Ausführungsbeispiel eines Fluidinjektors,
- Figur 9: siebtes Ausführungsbeispiel eines Fluidinjektors.

### Beschreibung der Ausführungsbeispiele

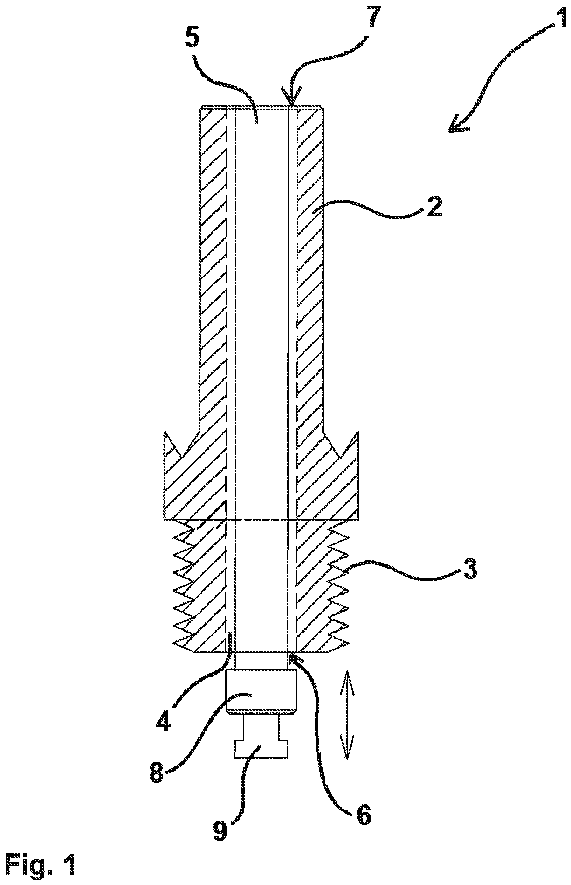

In Figur 1 ist ein nicht erfindungsgemäßer Fluidinjektor 1 mit Ringspalt dargestellt. Es weist einen Injektorkörper 2 mit einer Außenkontur auf. An der Außenseite ist der Injektorkörper 2 mit einer Befestigungseinrichtung 3 in Form eines Außengewindes ausgestattet, über das der Injektorkörper 2 an einem in der Zeichnung nicht dargestellten Spritzgusswerkzeug befestigt werden kann. Der Injektorkörper 2 weist einen länglichen Injektorkörper-Kanal 4 auf, in welchem eine Injektornadel 5 in Längsrichtung verschiebbar angeordnet ist. Der Innendurchmesser des Injektorkörper-Kanals 4 ist größer als der Außendurchmesser der Injektornadel 5. So kann der Innendurchmesser des Injektorkörper-Kanals 4 beispielsweise 0,02 mm größer sein als der Außendurchmesser der Injektornadel 5. Somit besteht zwischen dem Injektorkörper 2 und der Injektornadel 5 ein ringförmiger Spalt von 0,01 mm, durch den ein Fluid mit einem bestimmten Druck hindurchströmen kann. Dieser ringförmige Spalt wird als Ringspalt bezeichnet. An der einen Stirnseite des Injektorkörpers 2 befindet sich ein Injektorkörper-Einlass 6, an dem das Fluid in den Injektorkörper 2 einströmen kann. An der gegenüberliegenden Stirnseite des Injektorkörpers 2 befindet sich der Injektorkörper-Auslass 7, an dem das Fluid aus dem Injektorkörper 2 ausströmen kann. Damit die Injektornadel 5 sich beim Strömen eines Fluides durch den Injektorkanal 4 sich nicht beliebig und unkontrolliert in axialer Richtung bewegen kann, ist an dem dem Injektorkörper-Auslass 7 abgewandten Ende des Injektorkörpers 2 eine Verschiebewegbegrenzung 8 vorgesehen. Diese Verschiebewegbegrenzung ist ein zylinderscher Abschnitt, der fest mit der Injektornadel 5 verbunden ist. Der Durchmesser dieses Abschnitts ist größer als der Durchmesser des Injektorkörper-Kanals 4. Ein Aktuator 9 bewegt die Injektornadel 5 gezielt in axialer Richtung. Die Bewegungsrichtung der Injektornadel 5 ist in der Zeichnung durch zwei Pfeile angedeutet. Der Injektorkörper 2 kann eine Labyrinth-Dichtung ausbilden.

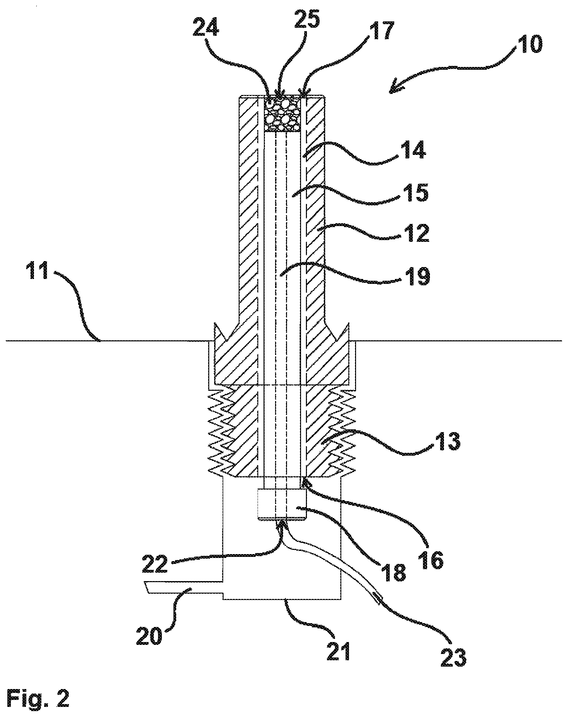

In Figur 2 ist ein erstes Ausführungsbeispiel eines erfindungsgemäßen Fluidinjektors 10 mit einem Injektorkörper 12, einer Befestigungseinrichtung 13 in Form eines Außengewindes, einem Injektorkörper-Kanal 14, einer in axialer Richtung in dem Injektorkörper-Kanal 14 verschiebbaren Injektornadel 15, einem Ringspalt zwischen dem Injektorkörper 12 und der Injektornadel 15, einem Injektorkörper-Einlass 16, einem Injektorkörper-Auslass 17 und einer Verschiebewegbegrenzung 18 dargestellt. Die Funktion dieser Komponenten entspricht im wesentlichen der Funktion des Fluidinjektors 1 gemäß Figur 1. Der Injektorkörper 12 ist über die Befestigungseinrichtung 13 an einer Spritzguss-vorrichtung 11 befestigt. Die Injektornadel 15 weist einen Injektornadel-Kanal 19 auf. Dieser verläuft in Längsrichtung der Injektornadel 15. Durch den Ringspalt zwischen dem Injektorkörper 12 und der Injektornadel 15 strömt ein erstes Fluid. Das erste Fluid wird über eine erste Zuleitung 20 mit Druck in eine Kammer 21 eingeleitet. Von dort gelangt es zu dem Injektorkörper-Einlass 16 an dem Injektorkörper-Kanal 15. Durch den Ringspalt zwischen dem Injektorkörper 12 und der Injektornadel 15 strömt das erste Fluid mit Druck zu dem dem Injektorkörper-Einlass 16 abgewandten Ende des Injektorkörpers 12, an welchem sich der Injektorkörper-Auslass 17 befindet. Dort strömt das erste Fluid aus dem Fluidinjektor 10 aus. Der Injektornadel-Kanal 19 weist einen Injektornadel-Einlass 22 auf, der an eine zweite Zuleitung 23 angeschlossen ist. An dem dem Injektornadel-Einlass 22 abgewandten Ende des Injektornadel-Kanals 19 befindet sich der Injektornadel-Auslass 24. Der Injektornadel-Auslass 19 ist unmittelbar benachbart zu dem Injektorkörper-Auslass 17. Ein Abschnitt 25 an dem dem Injektornadel-Einlass 22 abgewandten Ende der Injektornadel 15 besteht aus einem offenzelligen Material, beispielsweise Sintermetall. Die in diesem Material enthaltenen Öffnungen bilden gemeinsam den Injektornadel-Auslass 24. Dabei haben die Öffnungen des offenzelligen Materials einen kleineren Öffnungsquerschnitt als der Querschnitt des Injektornadel-Kanals 19. Damit die Öffnungen des offenzelligen Materials im Abschnitt 25 besser erkennbar sind, sind diese in der Zeichnung vergrößert dargestellt. Es liegt somit eine Querschnittsverengung an dem Injektornadel-Auslass 24 vor. Die Stirnseite der Injektornadel 15 besteht dabei ebenfalls aus dem offenzelligen Material. Über die Zuleitung 23 wird ein zweites Fluid in den Injektornadel-Einlass 22 und den Injektornadel-Kanal 19 eingeleitet. Durch die Öffnungen des offenzelligen Abschnitts 25 der Injektornadel 15, welche den Injektornadel-Auslass 24 bilden, strömt das zweite Fluid aus. Das zweite Fluid kann nur über die Öffnungen des offenzelligen Materials in dem Abschnitt 25 aus dem Injektornadel-Kanal 19 ausströmen.

Das erstes Fluid, welches gasförmig ist, beispielsweise Luft oder N₂, strömt aus dem Injektorkörper-Auslass 17 aus. Dem aus dem Injektorkörper-Auslass 17 ausströmenden ersten Fluid wirkt eine in ein nicht dargestelltes Spritzgusswerkzeug eingefüllte Formmasse entgegen. Aufgrund dieses Widerstandes und des Drucks in der Dosierkammer stellt sich eine Geschwindigkeit ein.

Wird über die Zuleitung 23 ein zweites Fluid, welches flüssig ist, beispielsweise Wasser, zugeführt und überwindet aufgrund des eingestellten Drucks den Widerstand der Querschnittsverengung an dem Injektornadel-Auslass 24, wird das zweite Fluid von dem ersten Fluid mitgerissen. Dabei vermischt sich das flüssige zweite Fluid mit dem gasförmigen ersten Fluid. Es entsteht ein zweiphasiges Gemisch in Form eines zerstäubten Nebels an dem Injektorkörper-Auslass 17.

In Abhängigkeit von der benötigten Prozessdynamik kann der Druck in der Kammer 21 für das erste Fluid und der Druck in der Zuleitung 23 für das zweite Fluid eingestellt sein. Eine Überwachung, Steuerung und/ oder Regelung des Drucks kann mit Hilfe von nicht dargestellten Drucksensoren erfolgen. Über ein Dichtungssystem ist die Trennung beider Fluide gewährleistet.

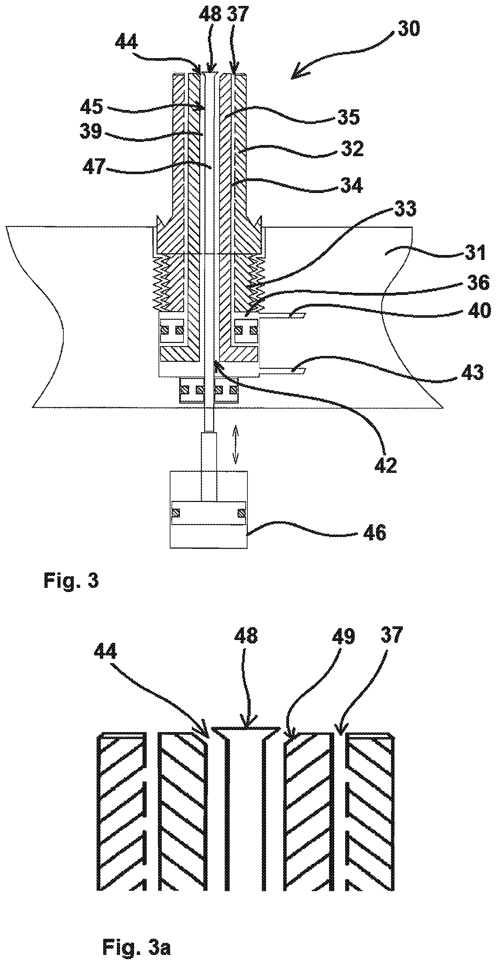

In Figur 3 ist ein zweites Ausführungsbeispiel eines erfindungsgemäßen Fluidinjektors 30 mit einem Injektorkörper 32, einer Befestigungseinrichtung 33 in Form eines Außengewindes, einem Injektorkörper-Kanal 34, einer in axialer Richtung in dem Injektorkörper-Kanal 34 verschiebbaren Injektornadel 35, einem Ringspalt zwischen dem Injektorkörper 32 und der Injektornadel 35, einem Injektorkörper-Einlass 36, einem Injektorkörper-Auslass 37, einem Injektornadel-Kanal 39, einer ersten Zuleitung 40 zu dem Injektorkörper-Kanal 34, einem Injektornadel-Einlass 42, einer zweiten Zuleitung 43 zu dem Injektornadel-Kanal 39 und einem Injektornadel-Auslass 44 dargestellt. Die Funktion dieser Komponenten entspricht im wesentlichen der Funktion des ersten Ausführungsbeispiels eines Fluidinjektors 20 gemäß Figur 2. Der Injektorkörper 32 ist über die Befestigungseinrichtung 33 an einem Formwerkzeug 31 befestigt. Figur 3a zeigt einen Ausschnitt aus Figur 3. Dabei ist das in Strömungsrichtung vordere Ende des Fluidinjektors 30 vergrößert dargestellt. Im Unterschied zu dem ersten Ausführungsbeispiel ist die Injektornadel 35 mit einer Verschlussnadel 45 ausgestattet, welche in dem Injektornadel-Kanal 39 in Längsrichtung verschiebbar angeordnet ist. Die Verschieberichtung ist in Figur 3 durch zwei Pfeile dargestellt. Die Verschlussnadel 45 wird durch einen Aktuator 46 in Längsrichtung bewegt. Die Verschlussnadel 45 weist einen zylindrischen ersten Abschnitt 47 und an ihrem dem Aktuator abgewandten Ende einen konischen zweiten Abschnitt auf, der als Schließkörper 48 ausgebildet ist. In diesem Bereich ist die Verschlussnadel 45 in Strömungsrichtung eines durch den Injektornadel-Kanal 39 strömenden und aus dem Injektornadel-Auslass 44 ausströmenden zweiten Fluids aufgeweitet. Der Injektornadel-Kanal 39 ist im Bereich des Injektornadel-Auslasses 44 ebenfalls konisch aufgeweitet. Die Injektornadel 35 bildet in diesem Abschnitt einen Schließkörpersitz 49 für den Schließkörper 48 der Verschlussnadel 45. Der Schließkörpersitz ist als konturgleiches Gegenlager zu dem Schließkörper ausgebildet. Durch Verschieben der Verschlussnadel 45 kann diese in eine Schließstellung bewegt werden. In der Schließstellung verschließt der Schließkörper 48 der Verschlussnadel 45 den Injektornadel-Auslass 44. Je weiter der Schließkörper 48 durch Verschieben der Verschlussnadel 45 von der Schließstellung entfernt ist, desto größer ist der Öffnungsquerschnitt des Injektornadel-Auslasses. Eine Querschnittsverengung des Injektornadel-Auslasses ist damit einstellbar.

Durch den Ringspalt zwischen dem Injektorkörper 32 und der Injektornadel 35 strömt ein erstes Fluid. Durch den Injektornadel-Kanal 39 strömt ein zweites Fluid. Das zweite Fluid wird nach dem Ausströmen aus dem Injektornadel-Kanal 44 von dem aus dem Injektorkörper-Kanal 37 ausströmenden ersten Fluid mitgerissen. Dabei vermischt sich das zweite Fluid mit dem ersten Fluid. Es entsteht ein zweiphasiges Gemisch in Form eines zerstäubten Nebels an dem Injektorkörper-Auslass 37.

Der Aktuator 46 kann mechanisch mit Federkraft vorgespannt sein, so dass das durch den Injektornadel-Kanal 39 strömende zweite Fluid die Federkraft überwinden muss, um die Verschlussnadel 45 in eine Öffnungsstellung zu überführen. Soll die Kraft prozessabhängig einstellbar sein, wird der Aktuator 46 über ein Fluid oder eine Servoachse gesteuert.

Zur Einstellung des Mischungsverhältnisses der ersten und zweiten Fluids werden das erste Fluid und das zweite Fluid über getrennte Zuleitungen 40 und 43 eingeleitet und getrennt voneinander bis zum Injektorkörper-Auslass 37 und zum Injektornadel-Auslass 44 geführt und dort zerstäubt. Erst am Injektorkörper-Auslass 37 und am Injektornadel-Auslass 44 des Fluidinjektors findet eine Mischung der Fluide zu einem zerstäubten Nebel statt.

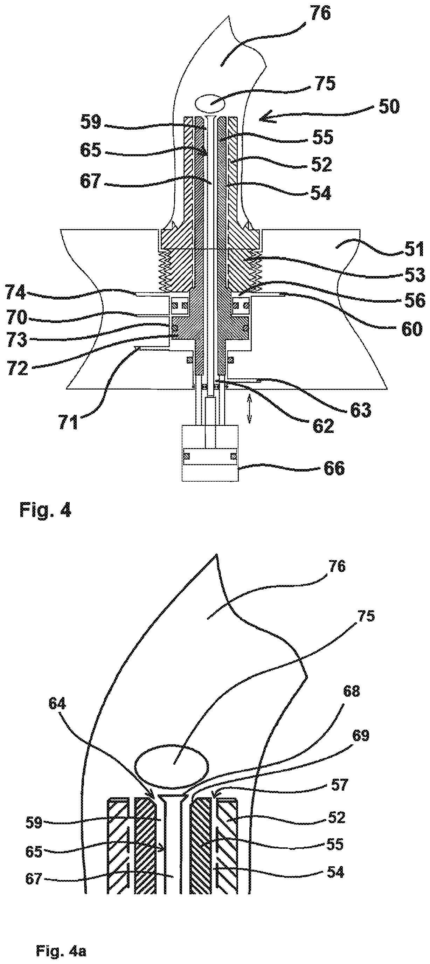

In Figur 4 ist ein drittes Ausführungsbeispiel eines erfindungsgemäßen Fluidinjektors 50 mit einem Injektorkörper 52, einer Befestigungseinrichtung 53 in Form eines Außengewindes, einem Injektorkörper-Kanal 54, einer in axialer Richtung in dem Injektorkörper-Kanal 54 verschiebbaren Injektornadel 55, einem Ringspalt zwischen dem Injektorkörper 52 und der Injektornadel 55, einem Injektorkörper-Einlass 56, einem Injektorkörper-Auslass 57, einem Injektornadel-Kanal 59, einer ersten Zuleitung 60 zu dem Injektorkörper-Kanal 54, einem Injektornadel-Einlass 62, einer zweiten Zuleitung 63 zu dem Injektornadel-Kanal 59, einem Injektornadel-Auslass 64, einer Verschlussnadel 65 mit zylindrischem Abschnitt 67 und Schließkörper 68, einem Aktuator 66 und einem Schließkörpersitz 69 dargestellt. Die Funktion dieser Komponenten entspricht im wesentlichen der Funktion des zweiten Ausführungsbeispiels eines Fluidinjektors 40 gemäß Figur 3. Der Injektorkörper 52 ist über die Befestigungseinrichtung 53 an einem Formwerkzeug 51 befestigt. Figur 4a zeigt einen Ausschnitt aus Figur 4. Dabei ist das in Strömungsrichtung vordere Ende des Fluidinjektors 50 vergrößert dargestellt. Das dritte Ausführungsbeispiel unterscheidet sich insbesondere hinsichtlich der Form der Injektornadel 55 von dem zweiten Ausführungsbeispiel gemäß Figur 3. Es sind Druckfluid-Zuleitungen 70, 71 vorgesehen, über die ein Druckfluid ein- und ausströmen kann, um die Injektornadel 55 in Längsrichtung zu verschieben. Die Bewegung der Injektornadel 55 wird hydraulischen oder pneumatisch realisiert. Hierzu ist die Injektornadel 55 mit einem Kolben 72 ausgestattet, der in einem Zylinder 73 verschiebbar geführt ist. Durch Ein- und Ausströmen eines Druckfluids in die Druckfluid-Zuleitungen 70 und 71 wird der Kolben 72 in dem Zylinder 73 bewegt und die Position der Injektornadel entsprechend eingestellt. In einer vorderen Einstellung ist am Injektorkörper-Auslass 57 nur ein kleiner Ringspalt vorhanden. In der hinteren Einstellung ist dagegen ein größerer Ringspalt gegeben. Somit kann das erste und zweite Fluid über die Zuleitungen 60 und 63 zugeführt und über die Einstellung der Verschlussnadel 65 und der Injektornadel 55 das Nebelgemisch eingestellt werden. Wird der Druck über die Leitung 74 abgebaut, hat dies den Vorteil, dass die Ventiltechnik nicht mit Additiven aus dem Polymer beim Druckabbau kontaminiert wird. Dadurch wird die Prozesssicherheit erhöht.

In Figur 4 sind der aus einem mehrphasigen Gemisch des ersten und zweiten Fluids gebildete Nebel 75 und eine Kavität 76 angedeutet, in der eine in der Zeichnung nicht dargestellte Formmasse geformt wird.

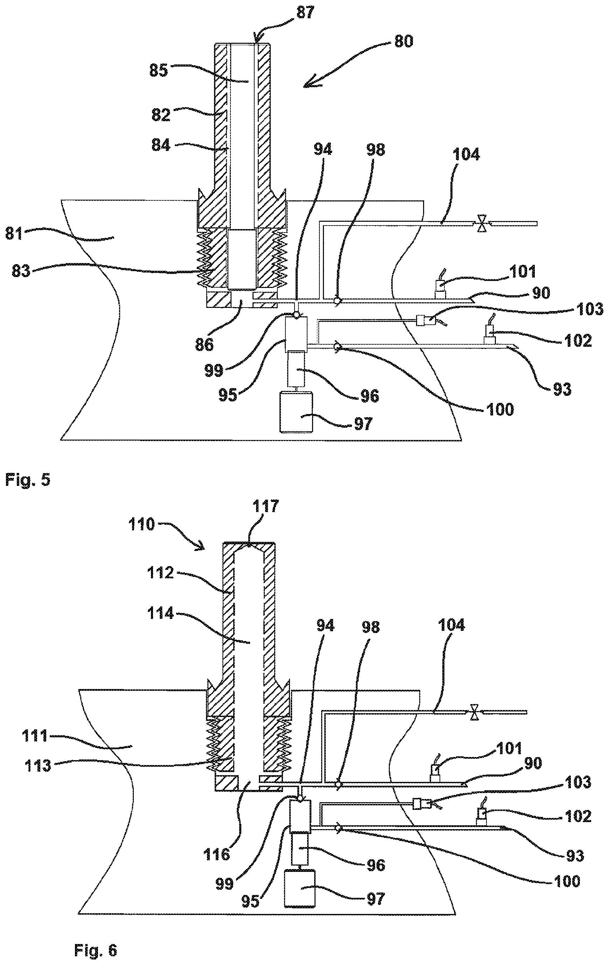

In Figur 5 ist ein viertes Ausführungsbeispiel eines erfindungsgemäßen Fluidinjektors 80 mit einem Injektorkörper 82, einer Befestigungseinrichtung 83 in Form eines Außengewindes, einem Injektorkörper-Kanal 84, einer Injektornadel 85, einem Ringspalt zwischen dem Injektorkörper 82 und der Injektornadel 85, einem Injektorkörper-Einlass 86, einem Injektorkörper-Auslass 87, einer ersten Zuleitung 90, über welche ein erstes Fluid zugeführt wird, und einer zweiten Zuleitung 93, über welche ein zweites Fluid zugeführt wird, dargestellt. Der Injektorkörper 82 ist über die Befestigungseinrichtung 83 an einem Formwerkzeug 81 befestigt. Das vierte Ausführungsbeispiel unterscheidet sich dadurch von dem ersten, zweiten und dritten Ausführungsbeispiel, dass das mehrphasige Gemisch in Form eines zerstäubten Nebels aus einen ersten Fluid und einem zweiten Fluid vor dem Injektorkörper-Einlass 86 erzeugt wird. Zu Nebelerzeugung weist die erste Zuleitung 90 eine Querschnittsverengung 94 auf. Diese ist in der Zeichnung aufgrund der Größenverhältnisse nicht erkennbar. Im Bereich der Querschnittsverengung 94 mündet die zweite Zuleitung 93 in die erste Zuleitung 90. Über die erste Zuleitung 90 wird ein gasförmiges erstes Fluid zugeführt. Über die zweite Zuleitung 93 wird ein flüssiges zweites Fluid zugeführt. Um im Bereich der Querschnittsverengung 94 eine Mischung des ersten Fluids mit dem zweiten Fluid zu erzielen, welches nicht kompressibel ist, muss der Druck des zweiten Fluids höher sein als der Druck des ersten Fluids. Um den hierfür notwendigen Druck aufzubauen, ist die zweite Zuleitung mit einem Zylinder 95 und einem in dem Zylinder 95 verschiebbar geführten Kolben 96 ausgestattet. Der Kolben 96 wird durch einen Kolbenantrieb 97 bewegt. In der ersten und zweiten Zuleitung 90, 93 sind ferner Rückschlagventile 98, 99, 100 vorgesehen, die verhindern, dass das erste oder zweite Fluid entgegen der für die Zufuhr vorgesehenen Strömungsrichtung zurück in die Zuleitungen 90, 93 gedrückt werden. Darüber hinaus sind an der ersten und zweiten Zuleitung 90, 93 Drucksensoren 101, 102, 103 vorgesehen, welche der Überwachung, Steuerung und/ oder Regelung des Drucks dienen. Eine Leitung 104 dient dazu, das Fluid nach dem Erzeugen eines Hohlraums in einer Formmasse wieder abzuleiten und den Druck abzubauen.

Die Querschnittsverengung 94 und die in diesem Bereich in die erste Zuleitung 90 mündende zweite Zuleitung 93 wirken wie eine Venturi-Düse. Dadurch wird das zweite Fluid von dem ersten Fluid mitgerissen. Es bildet sich ein zweiphasiges Gemisch in Form eines zerstäubten Nebels aus dem ersten und zweiten Fluid. Dieser zerstäubte Nebel wird über den Injektorkörper-Einlass 86 in den Injektorkörper-Kanal 84 geleitet. Er strömt an dem Injektorkörper-Auslass 87 aus dem Fluidinjektor aus.

Der für die Erzeugung eines Hohlraums in einer in Figur 5 nicht dargestellten Formmasse erforderliche Druck ist proportional höher als der entgegen wirkende Druck der Formmasse, welche in ein in der Zeichnung nicht dargestelltes Formwerkzeug eingeleitet wird.

Um eine höhere Reproduzierbarkeit zu erreichen wird eine Master Slave Funktion aufgebaut. Es wird ein Sollwert X für das erste Fluid, welches über die erste Zuleitung 90 einströmt, definiert. Am Drucksensor 101 wird der Druck des ersten Fluids als Istwert erfasst und mit einem Druck-Sollwert des ersten Fluids verglichen. Anschließend wird der Druck entsprechend geregelt. Die Regelung kann analog oder auch digital erfolgen. Der Istwert des Drucksensors 101 ist der Referenzwert für den arithmetischen, mathematisch ermittelten Sollwert.

Über eine Differenz-Druckmessung, einem einstellbaren Offset und einer druckabhängigen Volumenstromregelung wird das zweite Fluid injiziert. Ist eine druckabhängige Volumenstromregelung abbildbar, erfolgt nur eine Druck-Differenzregelung zwischen Druck Istwert des ersten Fluids, dem Drucksensor 101 und dem Offset des Drucksensors 102.

Das Rückschlagventil 99 verhindert, dass das erste Fluid in den Zylinder 95 gelangt.

Durch das Verschieben des Kolbens 96 in dem Zylinder 95 erfolgt das Einleiten des zweiten Fluids in die erste Zuleitung 90 im Bereich der Querschnittsverengung 94. Der Druck in der zweiten Zuleitung 93 wird mit dem Drucksensor 103 gemessen. Das Rückschlagventil 100 verhindert, dass das zweite Fluid in die zweite Zuleitung 93 zurückgedrückt wird. Um eine Druck-Differenzregelung zu ermöglichen, wird der Druck Istwert Sensor 101 mit dem Druck Istwert Sensor 102 in Vergleich gesetzt.

Die erste und zweite Zuleitung 90, 93 können in einem Formwerkzeug angeordnet sein.

Die Dosierung den zweiten Fluids in dem ersten Fluid basiert auf dem Verdrängungsprinzip. Alternativ kann anstatt einer linearen Dosierung auch ein Rotations-Axialwandler eingesetzt werden.

Bei einer druckabhängigen Volumenstromregelung kann die Volumenstrommessung bei axialen Systemen die Wegposition erfasst werden. In Abhängigkeit des zurückgelegten Kolbenweges bezogen auf die Kolbenfläche und verglichen mit der Positionsveränderung kann das Volumen ermittelt werden.

Bei dem Rotations-Axialwandler wird der Bezug zum Rotationswinkel und dem zurückgelegten Weg, bezogen auf die Fläche der Kolben, mathematisch verknüpft und geregelt.

Diese Systeme besitzen den Vorteil, dass nach der Hohlraumbildung in einer Formmasse, in Zusammenhang mit einem Spülinjektor, das Bauteil, weil preiswerter, ohne Benutzung eines ersten Fluid abgekühlt werden kann.

Um den Wirkungsgrad der Mischung aus erstem und zweitem Fluid zu erhöhen, kann zwischen beiden Fluiden, nachdem diese zusammengeführt wurden, im Injektor ein Mischrohr angebracht werden. Über Veränderung der Oberflächenrauheit und/oder auch Labyrinthen entstehen nützliche Turbulenzen zur besseren Vermischung.

In Figur 6 ist ein nicht erfindungsgemäßer Fluidinjektors 110 dargestellt. Der Fluidinjektor 110 stimmt hinsichtlich der ersten Zuleitung 90, der zweiten Zuleitung 93, der Querschnittsverengung 94, dem Zylinder 95, dem Kolben 96, dem Kolbenantrieb 97, den Rückschlagventilen 98, 99, 100, den Drucksensoren 101, 102, 103 und der Leitung 104 mit dem Fluidinjektor 80 des vierten Ausführungsbeispiels gemäß Figur 5 überein. Der Fluidinjektor 110 unterscheidet sich von dem Fluidinjektor 80 im Injektorkörper
112. Dieser weist zwar auch eine Befestigungseinrichtung 113 auf, mit der er an einem Formwerkzeug 111 befestigt ist, und ein Injektorkörper-Einlass 116, in den die erste Zuleitung 90 mündet. Jedoch ist der Injektorkörper-Kanal 114 an seinem Injektorkörper-Auslass 117 zu einer Düse geformt. Der Öffnungsquerschnitt der Düse ist um ein Vielfaches kleiner als der Querschnitt des Injektorkörper-Kanals 114. Eine Injektornadel ist bei dem Fluidinjektor 110 nicht vorgesehen. Der im Bereich der Querschnittsverengung 94 der ersten Zuleitung 90 wie bei dem vierten Ausführungsbeispiel aus einem ersten Fluid und einem zweiten Fluid erzeugte Nebel wird über den Injektorkörper-Einlass 116, den Injektorkörper-Kanal 114 dem düsenförmigen Injektorkörper-Auslass 117 zugeführt, durch welchen der Nebel ausströmt.

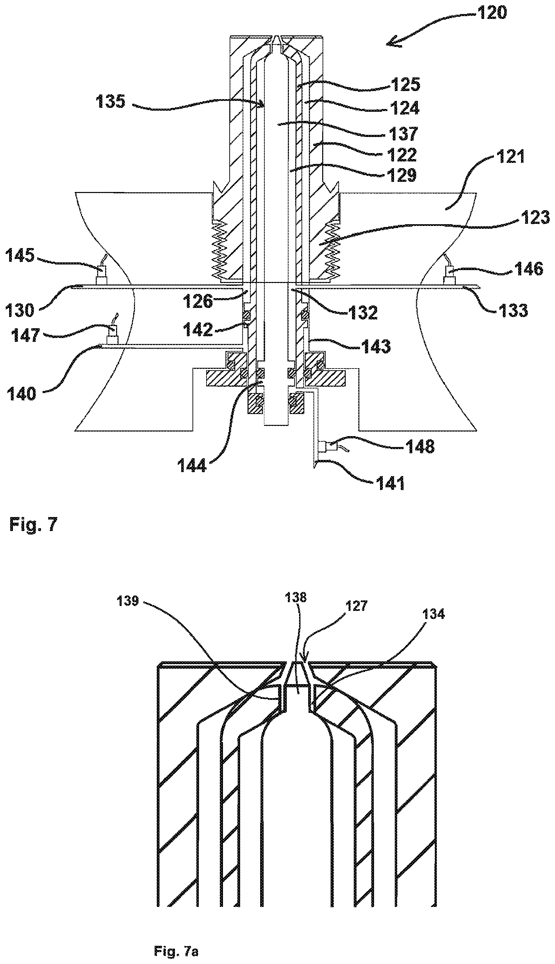

In Figur 7 ist ein fünftes Ausführungsbeispiel eines erfindungsgemäßen Fluidinjektors 120 mit einem Injektorkörper 122, einer Befestigungseinrichtung 123 in Form eines Außengewindes, einem Injektorkörper-Kanal 124, einer in axialer Richtung in dem Injektorkörper-Kanal 124 verschiebbaren Injektornadel 125, einem Ringspalt zwischen dem Injektorkörper 122 und der Injektornadel 125, einem Injektorkörper-Einlass 126, einem Injektorkörper-Auslass 127, einem Injektornadel-Kanal 129, einer ersten Zuleitung 130 zu dem Injektorkörper-Kanal 124, einem Injektornadel-Einlass 132, einer zweiten Zuleitung 133 zu dem Injektornadel-Kanal 129, einem Injektornadel-Auslass 134, einer Verschlussnadel 135 mit zylindrischem Abschnitt 137 und Schließkörper 138 und einem Schließkörpersitz 139 dargestellt. Die Funktion dieser Komponenten entspricht im wesentlichen der Funktion des dritten Ausführungsbeispiels eines Fluidinjektors 60 gemäß Figur 4. Der Injektorkörper 122 ist über die Befestigungseinrichtung 123 an einem Formwerkzeug 121 befestigt. Figur 7a zeigt einen Ausschnitt aus Figur 7. Dabei ist das in Strömungsrichtung vordere Ende des Fluidinjektors 120 vergrößert dargestellt. Das sechste Ausführungsbeispiel unterscheidet sich insbesondere hinsichtlich der Form des Injektorkörpers 122, der Injektornadel 125 und der Verschlussnadel 135 von dem dritten Ausführungsbeispiel gemäß Figur 4. Der Injektorkörper 122 weist an seinem Injektorkörper-Auslass 127 eine Querschnittsverengung auf. Der Injektorkörper-Auslass 127 ist als Düse ausgebildet. Die Injektornadel 125 weist an ihrem Injektornadel-Auslass 134 ebenfalls eine Querschnittsverengung auf. Der Injektornadel-Auslass 134 ist als Schließkörpersitz für den Schließkörper 138 der Verschlussnadel 135 ausgebildet. Im Unterschied zu dem dritten Ausführungsbeispiel ist der Schließkörper als Dorn ausgebildet mit einem zylindrischen Abschnitt und einer sich daran anschließenden konisch sich verjüngenden Spitze. Entsprechend ist der als Schließkörpersitz ausgebildete Injektornadel-Auslass 134 zylindrisch geformt.

Die Injektornadel 125 wird durch das Einströmen eines ersten Fluids über die erste Zuleitung 130 in den Injektorkörper-Kanal 124 in eine Öffnungsstellung bewegt und durch Einströmen eines Druckfluids, welches von dem ersten Fluid verschieden sein kann, über eine Druckfluid-Zuleitung 140 in eine Schließstellung bewegt. Hierzu weist die Injektornadel 125 einen Kolben 142 auf, der in einem Zylinder 143 geführt ist.

Die Verschlussnadel 135 wird durch das Einströmen eines zweiten Fluids über die zweite Zuleitung 133 in den Injektornadel-Kanal 129 in eine Öffnungsstellung bewegt und durch Einströmen eines Druckfluids, welches von dem zweiten Fluid verschieden sein kann, über eine Druckfluid-Zuleitung 141 in eine Schließstellung bewegt. Hierzu weist die Verschlussnadel 125 einen Kolben 144 auf, der in dem Injektornadel-Kanal 129 geführt ist.

Die ersten Zuleitung 130, die zweite Zuleitung 133 und die Druckfluid-Zuleitungen 140 und 141 sind mit Drucksensoren 145, 146, 147 und 148 ausgestattet.

Der Fluidinjektor 120 hat gegenüber dem Fluidinjektor 50 den Vorteil, dass der Injektorkörper-Auslass 127 und der Injektornadel-Auslass 134 mit dem Schließkörper der Verschlussnadel 125 verschlossen werden können. Dadurch kann verhindert werden, dass Formmasse in den Fluidinjektor eindringt.

Die Entstehung eines mehrphasigen Gemischs erfolgt bei dem Fluidinjektor 120 wie bei dem Fluidinjektor 30 und bei dem Fluidinjektor 50.

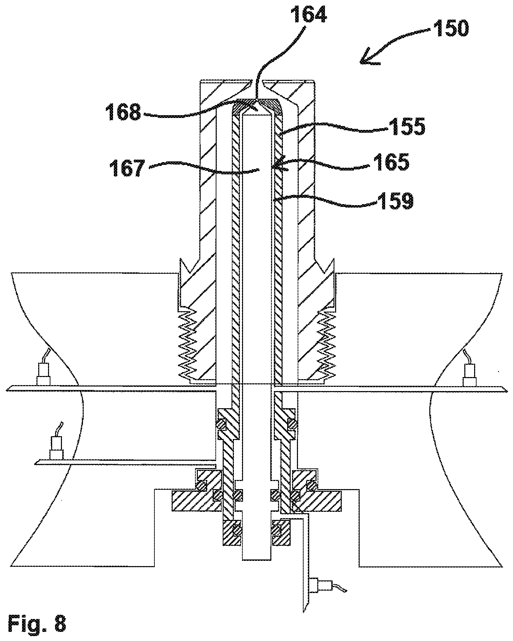

In Figur 8 ist ein sechstes Ausführungsbeispiel eines erfindungsgemäßen Fluidinjektors 150 dargestellt. Er unterscheidet sich von dem Fluidinjektor 120 gemäß Figur 7 hinsichtlich des Bereichs des Injektornadel-Auslasses 164 und hinsichtlich des Schließkörpers 168 der Verschlussnadel 165. Der Schließkörper 168 des Verschlussnadel 165 ist als Konus ausgebildet, der sich zur Spitze des Verschlussnadel 165 hin verjüngt. Die Injektornadel 155 ist an dem Injektornadel-Auslass 164 als Düse ausgebildet. Der Querschnitt ist im Bereich des Injektornadel-Auslasses 164 um ein Vielfaches kleiner als der Querschnitt des Injektornadel-Kanals 159. In einer Schließstellung verschließt der Schließkörper 168 der Verschlussnadel 165 den Injektornadel-Auslass 164. Alle übrigen Komponenten des Fluidinjektors 150 stimmen mit dem Fluidinjektor 120 überein. Zu Funktionsweise wird auf die obigen Ausführungen verwiesen.

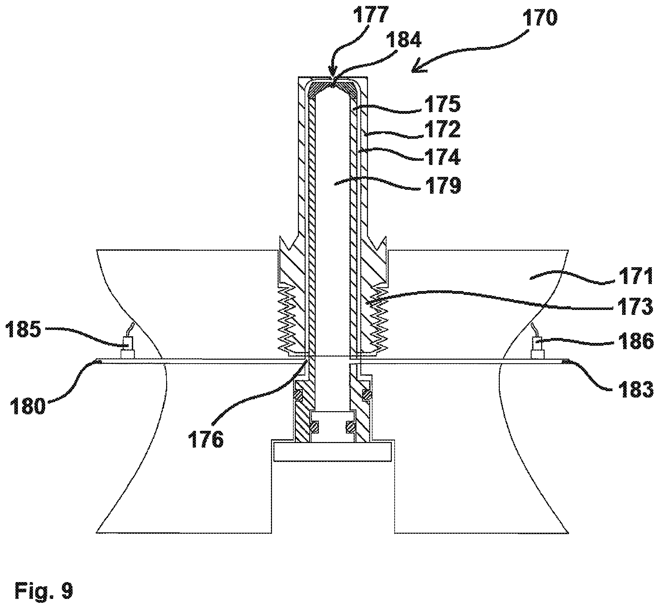

In Figur 9 ist ein siebtes Ausführungsbeispiel eines erfindungsgemäßen Fluidinjektors 170 mit einem mit einem Injektorkörper 172, einer Befestigungseinrichtung 173 in Form eines Außengewindes, einem Injektorkörper-Kanal 174, einer fest angeordneten Injektornadel 175, einem Ringspalt zwischen dem Injektorkörper 172 und der Injektornadel 175, einem Injektorkörper-Einlass 176, einem Injektorkörper-Auslass 177, einem Injektornadel-Kanal 179, einer ersten Zuleitung 180 für die Zufuhr eines ersten Fluids in den Ringspalt und einer zweiten Zuleitung 183 für die Zufuhr eines zweiten Fluids in den Injektornadel-Kanal 179. Der Injektorkörper 172 ist über die Befestigungseinrichtung 173 an einer Spritzgussvorrichtung 171 befestigt. Der Druck in der ersten Zuleitung 180 wird über einen Drucksensor 185 überwacht. Der Druck in der zweiten Zuleitung 183 wird über einen Drucksensor 186 überwacht.

Die Injektornadel 175 ist fest an dem Injektorkörper 172 angeordnet. Sie verändert ihre Position nicht. Der Injektorkörper-Auslass 177 und der Injektornadel-Auslass 184 sind als Düsen ausgebildet. Der Querschnitt des Injektorkörper-Auslasses 177 ist kleiner als der Querschnitt des Ringspaltes zwischen dem Injektorkörper 172 und der Injektornadel 175. Der Querschnitt des Injektornadel-Auslasses 184 ist um ein Vielfaches kleiner als der Querschnitt des Injektornadel-Kanals 179. Die Querschnitte sind fest vorgegeben. Sie können lediglich dadurch verändert werden, dass die zu den düsenförmigen Auslässen gehörenden Düsen ausgetauscht werden.

Beim Ausströmen eines zweiten Fluids aus dem Injektornadel-Auslass 184 wird dieses durch ein erstes Fluid, welches zeitgleich durch den Ringspalt strömt, zerstäubt und mitgerissen. Durch bildet sich im Bereich des Injektornadel-Auslasses 184 und des Injektorkörper-Auslasses 177 ein mehrphasiges Gemisch in Form eines zerstäubten Nebels. Dieser strömt aus dem Injektorkörper-Auslass 177 aus.

Die in den Figuren 2 bis 9 dargestellten Ausführungsbeispiele von Fluidinjektoren können an ein Formwerkzeug einer Spritzguss-Vorrichtung, einer Vorrichtung zum Blasformen oder eine Vorrichtung zur Hohlkörperextrusion angeschlossen werden.

### Bezugszahlen

- 1: Fluidinjektor
- 2: Injektorkörper
- 3: Befestigungseinrichtung
- 4: Injektorkörper-Kanal
- 5: Injektornadel
- 6: Injektorkörper-Einlass
- 7: Injektorkörper-Auslass
- 8: Verschiebewegbegrenzung
- 9: Aktuator
- 10: Fluidinjektor
- 11: Spritzgussvorrichtung
- 12: Injektorkörper
- 13: Befestigungseinrichtung
- 14: Injektorkörper-Kanal
- 15: Injektornadel
- 16: Injektorkörper-Einlass
- 17: Injektorkörper-Auslass
- 18: Verschiebewegbegrenzung
- 19: Injektornadel-Kanal
- 20: Erste Zuleitung
- 21: Kammer
- 22: Injektornadel-Einlass
- 23: Zweite Zuleitung
- 24: Injektornadel-Auslass
- 25: Abschnitt aus einem offenzelligen Material
- 26:
- 27:
- 28:
- 29:
- 30: Fluidinjektor
- 31: Formwerkzeug
- 32: Injektorkörper
- 33: Befestigungseinrichtung
- 34: Injektorkörper-Kanal
- 35: Injektornadel
- 36: Injektorkörper-Einlass
- 37: Injektorkörper-Auslass
- 38:
- 39: Injektornadel-Kanal
- 40: Erste Zuleitung
- 41:
- 42: Injektornadel-Einlass
- 43: Zweite Zuleitung
- 44: Injektornadel-Auslass
- 45: Verschlussnadel
- 46: Aktuator
- 47: Zylindrischer Abschnitt der Verschlussnadel
- 48: Schließkörper der Verschlussnadel
- 49: Schließkörpersitz
- 50: Fluidinjektor
- 51: Formwerkzeug
- 52: Injektorkörper
- 53: Befestigungseinrichtung
- 54: Injektorkörper-Kanal
- 55: Injektornadel
- 56: Injektorkörper-Einlass
- 57: Injektorkörper-Auslass
- 58:
- 59: Injektornadel-Kanal
- 60: Erste Zuleitung
- 61:
- 62: Injektornadel-Einlass
- 63: Zweite Zuleitung
- 64: Injektornadel-Auslass
- 65: Verschlussnadel
- 66: Aktuator
- 67: Zylindrischer Abschnitt der Verschlussnadel
- 68: Schließkörper der Verschlussnadel
- 69: Schließkörpersitz
- 70: Druckfluid-Zuleitung
- 71: Druckfluid-Zuleitung
- 72: Kolben
- 73: Zylinder
- 74: Leitung
- 75: Nebel
- 76: Kavität
- 77:
- 78:
- 79:
- 80: Fluidinjektor
- 81: Formwerkzeug
- 82: Injektorkörper
- 83: Befestigungseinrichtung
- 84: Injektorkörper-Kanal
- 85: Injektornadel
- 86: Injektorkörper-Einlass
- 87: Injektorkörper-Auslass
- 88:
- 89:
- 90: Erste Zuleitung
- 91:
- 92:
- 93: Zweite Zuleitung
- 94: Querschnittsverengung in der ersten Zuleitung
- 95: Zylinder
- 96: Kolben
- 97: Kolbenantrieb
- 98: Rückschlagventil
- 99: Rückschlagventil
- 100: Rückschlagventil
- 101: Drucksensor
- 102: Drucksensor
- 103: Drucksensor
- 104: Leitung
- 105:
- 106:
- 107:
- 108:
- 109:
- 110: Fluidinjektor
- 111: Formwerkzeug
- 112: Injektorkörper
- 113: Befestigungseinrichtung
- 114: Injektorkörper-Kanal
- 115:
- 116: Injektorkörper-Einlass
- 117: Injektorkörper-Auslass
- 118:
- 119:
- 120: Fluidinjektor
- 121: Formwerkzeug
- 122: Injektorkörper
- 123: Befestigungseinrichtung
- 124: Injektorkörper-Kanal
- 125: Injektornadel
- 126: Injektorkörper-Einlass
- 127: Injektorkörper-Auslass
- 128:
- 129: Injektornadel-Kanal
- 130: Erste Zuleitung
- 131:
- 132: Injektornadel-Einlass
- 133: Zweite Zuleitung
- 134: Injektornadel-Auslass
- 135: Verschlussnadel
- 136:
- 137: Zylindrischer Abschnitt der Verschlussnadel
- 138: Schließkörper der Verschlussnadel
- 139: Schließkörpersitz
- 140: Druckfluid-Zuleitung
- 141: Druckfluid-Zuleitung
- 142: Kolben
- 143: Zylinder
- 144: Kolben
- 145: Drucksensor
- 146: Drucksensor
- 147: Drucksensor
- 148: Drucksensor
- 149:
- 150: Fluidinjektor
- 151:
- 152:
- 153:
- 154:
- 155: Injektornadel
- 156:
- 157:
- 158:
- 159: Injektornadel-Kanal
- 160:
- 161:
- 162:
- 163:
- 164: Injektornadel-Auslass
- 165: Verschlussnadel
- 166:
- 167: Zylindrischer Abschnitt der Verschlussnadel
- 168: Schließkörper der Verschlussnadel
- 169:
- 170: Fluidinjektor
- 171: Formwerkzeug
- 172: Injektorkörper
- 173: Befestigungseinrichtung
- 174: Injektorkörper-Kanal
- 175: Injektornadel
- 176: Injektorkörper-Einlass
- 177: Injektorkörper-Auslass
- 178:
- 179: Injektornadel-Kanal
- 180: Erste Zuleitung
- 181:
- 182: Injektornadel-Einlass
- 183: Zweite Zuleitung
- 184: Injektornadel-Auslass
- 185: Drucksensor
- 186: Drucksensor

## Patentansprüche

1. Fluidinjektor zur Herstellung von Hohlkörpern mittels Fluidinjektionstechnik, über den ein mehrphasiges Gemisch in Form eines zerstäubten Nebels in eine noch fließfähige Formmasse eingeleitet und dabei in der Formmasse ein Hohlraum durch Verdrängung der Formmasse erzeugt wird und/ oder die Formmasse gekühlt wird,
mit einem Injektorkörper (12, 32, 52, 122, 172),
mit einer an einer Außenseite des Injektorkörpers angeordneten Befestigungseinrichtung (13, 33, 53, 123, 173), mit welcher der Fluidinjektor (10, 30, 50, 120, 150, 170) an einem Formwerkzeug (11, 31, 51, 121, 171) befestigbar ist,
mit einem länglichen Injektorkörper-Kanal (14, 34, 54, 124, 174) in dem Injektorkörper (12, 32, 52, 122, 172),
mit einem Injektorkörper-Einlass (16, 36, 56, 126, 176), an welchem ein gasförmiges oder flüssiges erstes Fluid in den Injektorkörper-Kanal (14, 34, 54, 124, 174) einleitbar ist,
mit einem Injektorkörper-Auslass (17, 37, 57, 127, 177), an welchem das erste Fluid aus dem Injektorkörper-Kanal (14, 34, 54, 124, 174) ausströmt, mit einer in dem Injektorkörper-Kanal (14, 34, 54, 124, 174) angeordneten Injektornadel (15, 35, 55, 125, 155, 175), deren Außendurchmesser kleiner ist als der Innendurchmesser des Injektorkörper-Kanals (14, 34, 54, 124, 174), wobei sich zwischen dem Injektorkörper (12, 32, 52, 122, 172) und der Injektornadel (15, 35, 55 125, 175) ein Ringspalt ausbildet, durch welchen das erste Fluid strömt,
mit einem länglichen Injektornadel-Kanal (19, 39, 59, 129, 159, 179), welcher sich in Längsrichtung durch die Injektornadel (15, 35, 55, 125, 155, 175) erstreckt,
mit einem Injektornadel-Einlass (22, 42, 62, 132, 182), an welchem ein flüssiges oder gasförmiges, in seinem Aggregatzustand vom ersten Fluid verschiedenes zweites Fluid in den Injektornadel-Kanal (19, 39, 59, 129, 159, 179) einleitbar ist,
mit einem Injektornadel-Auslass (24, 44, 64, 134, 164, 184), aus welchem das zweite Fluid zeitgleich mit dem aus dem Injektorkörper-Auslass (17, 37, 57, 127, 177) ausströmenden ersten Fluid ausströmt und dabei mit dem ersten Fluid ein mehrphasiges Gemisch in Form eines zerstäubten Nebels bildet, welches mit dem Fluidinjektor (10, 30, 50, 120, 150, 170) in eine fließfähige Formmasse einleitbar ist **gekennzeichnet durch** eine an den Injektorkörper-Einlass (16, 36, 56, 126, 176) gekoppelte erste Zuleitung (20, 40, 60, 90, 130, 180) für das erste Fluid und eine an den Injektornadel-Einlass (22, 42, 62, 132, 182) gekoppelte zweite Zuleitung (23, 43, 63, 93, 133, 183) für das zweite Fluid, wobei die Zuleitung für das erste und/ oder zweite Fluid mit einer Dosiereinrichtung ausgestattet ist.

2. Fluidinjektor nach Anspruch 1, **dadurch gekennzeichnet, dass** der Injektornadel-Auslass (24, 44, 64, 134, 164, 184) eine Querschnittsverengung aufweist.

3. Fluidinjektor nach Anspruch 1 oder 2, dass der Injektorkörper-Kanal (14, 34, 54, 124, 174) an dem Injektorkörper-Auslass eine Querschnittsverengung aufweist.

4. Fluidinjektor nach Anspruch 1, 2 oder 3, **dadurch gekennzeichnet, dass** der Injektornadel-Auslass (134, 164, 184) eine oder mehrere Düsen aufweist.

5. Fluidinjektor nach einem der vorhergehenden Ansprüche, **dadurch gekennzeichnet, dass** die Injektornadel (15) an dem Injektornadel-Auslass ein offenzelliges oder offenporiges Material aufweist.

6. Fluidinjektor nach einem der vorhergehenden Ansprüche, **dadurch gekennzeichnet, dass** die Injektornadel (15, 35, 55, 125, 155) in dem Injektorkörper-Kanal (14, 34, 54, 124) in Längsrichtung verschiebbar angeordnet ist.

7. Fluidinjektor nach einem der vorhergehenden Ansprüche, **dadurch gekennzeichnet, dass** die Injektornadel (15, 35, 55, 125, 175) eine im Injektornadel-Kanal in Längsrichtung verschiebbare Verschlussnadel (45, 65, 135, 165) aufweist.

8. Fluidinjektor nach Anspruch 7, **dadurch gekennzeichnet, dass** die Verschlussnadel (45, 65, 135, 165) einen zylindrischen ersten Abschnitt aufweist, dessen Außendurchmesser kleiner ist als der Innendurchmesser des Injektornadel-Kanals (39, 59, 129, 159), wobei sich zwischen der Injektornadel (35, 55, 125, 155) und der Verschlussnadel (45, 65, 135, 165) ein Ringspalt ausbildet, und dass die Verschlussnadel (45, 65, 135, 165) einen zweiten als Schließkörper (48, 68, 138, 168) ausgebildeten Abschnitt aufweist, der in Schließstellung den Injektornadel-Auslass (44, 64, 134, 164) verschließt.

9. Fluidinjektor nach Anspruch 7 oder 8, **dadurch gekennzeichnet, dass** die Verschlussnadel (135) einen zylindrischen Abschnitt an der Spitze aufweist, und dass der Injektornadel-Kanal (129) einen entsprechenden zylindrischen Abschnitt aufweist, welcher in einer Schließstellung der Verschlussnadel (135) durch den zylindrischen Abschnitt der Verschlussnadel (135) verschlossen ist.

10. Fluidinjektor nach einem der vorhergehenden Ansprüche, **dadurch gekennzeichnet, dass** die Injektornadel (55, 125, 155) an ihrem dem Injektornadel-Auslass (64, 134, 164) abgewandten Ende mit einem Kolben (72, 142) ausgestattet ist, und dass der Fluidinjektor (50, 120, 150) einen hydraulischen oder pneumatischen Zylinder (73, 143) aufweist, in welchem der Kolben (72, 142) verschiebbar geführt ist.

11. Verfahren zur Herstellung von Hohlkörpern mittels Fluidinjektionstechnik mit einem Fluidinjektor nach einem der vorhergehenden Ansprüche, **dadurch gekennzeichnet, dass** aus einem gasförmigen ersten Fluid und einem flüssigen zweiten Fluid ein mehrphasiges Gemisch in Form eines zerstäubten Nebels unter Ausnutzung des Prinzips einer Venturi-Düse erzeugt wird, und dass der Nebel in eine noch fließfähige Formmasse eingeleitet und dabei ein Hohlraum in der Formmasse erzeugt oder die Formmasse gekühlt wird.

## Claims

1. Fluid injector for producing hollow bodies by means of fluid-injection technology, with which a multi-phase mixture in the form of an atomised mist is introduced into a still-fluid moulding material, whereby a cavity is created in the moulding material through displacement of the moulding material and/or the moulding material is cooled,
with an injector body (12, 32, 52, 122, 172),
with a fastening device (13, 33, 53, 123, 173) on an outer surface of the injector body with which the fluid injector (10, 30, 50, 120, 150, 170) can be fastened to a moulding tool (11, 31, 51, 121, 171),
with an elongated injector body channel (14, 34, 54, 124, 174) in the injector body (12, 32, 52, 122, 172),
with an injector body inlet (16, 36, 56, 126, 176) at which a gaseous or liquid first fluid can be introduced into the injector body channel (14, 34, 54, 124, 174),
with an injector body outlet (17, 37, 57, 127, 177) at which the first fluid flows out of the injector body channel (14, 34, 54, 124, 174),
with an injector needle (15, 35, 55, 125, 155, 175) arranged in the injector body channel (14, 34, 54, 124, 174) with an outer diameter that is smaller than the inner diameter of the injector body channel (14, 34, 54, 124, 174), whereby an annular gap is formed between the injector body (12, 32, 52, 122, 172) and the injector needle (15, 35, 55 125, 175) through which the first fluid flows,
with an elongated injector needle channel (19, 39, 59, 129, 159, 179) that runs longitudinally through the injector needle (15, 35, 55, 125, 155, 175), with an injector needle inlet (22, 42, 62, 132, 182) at which a liquid or gaseous second fluid that deviates from the first fluid with regard to its physical state can be introduced into the injector needle channel (19, 39, 59, 129, 159, 179),
with an injector needle outlet (24, 44, 64, 134, 164, 184) from which the second fluid flows out simultaneously with the first fluid flowing out of the injector body outlet (17, 37, 57, 127, 177) and thereby together with the first fluid forms a multi-phase mixture in the form of an atomised mist that can be introduced into a still-fluid moulding material by the fluid injector (10, 30, 50, 120, 150, 170),
**characterised by** a first feed line (20, 40, 60, 90, 130, 180) connected to the injector body inlet (16, 36, 56, 126, 176) for the first fluid and a second feed line (23, 43, 63, 93, 133, 183) connected to the injector needle inlet (22, 42, 62, 132, 182) for the second fluid, whereby the feed line for the first and/or second fluid is equipped with a metering device.

2. Fluid injector according to claim 1, **characterised in that** the injector needle outlet (24, 44, 64, 134, 164, 184) has a narrowing of the cross-section.

3. Fluid injector according to claim 1 or 2, **characterised in that** the injector body channel (14, 34, 54, 124, 174) has a narrowing of the cross-section at the injector body outlet.

4. Fluid injector according to claim 1, 2 or 3, **characterised in that** the injector needle outlet (134, 164, 184) has one or more nozzles.

5. Fluid injector according to one of the previous claims, **characterised in that** the injector needle (15) at the injector needle outlet is made of an open-celled or open-pored material.

6. Fluid injector according to one of the previous claims, **characterised in that** the injector needle (15, 35, 55, 125, 155) is arranged to be displaceable in the longitudinal direction in the injector body channel (14, 34, 54, 124).

7. Fluid injector according to one of the previous claims, **characterised in that** the injector needle (15, 35, 55, 125, 175) has a shut-off needle (45, 65, 135, 165) that is displaceable in the longitudinal direction in the injector needle channel.

8. Fluid injector according to claim 7, **characterised in that** the shut-off needle (45, 65, 135, 165) has a cylindrical first section with an outer diameter that is smaller than the inner diameter of the injector needle channel (39, 59, 129, 159), whereby an annular gap is formed between the injector needle (35, 55, 125, 155) and the shut-off needle (45, 65, 135, 165), and that the shut-off needle (45, 65, 135, 165) has a second section which has the form of a closing body (48, 68, 138, 168) that seals the injector needle outlet (44, 64, 134, 164) in the closed position.

9. Fluid injector according to claim 7 or 8, **characterised in that** the shut-off needle (135) has a cylindrical section at the tip, and that the injector needle channel (129) has a corresponding cylindrical section that is sealed by the cylindrical section of the shut-off needle (135) when the shut-off needle (135) is in the closed position.

10. Fluid injector according to one of the previous claims, **characterised in that** the injector needle (55, 125, 155) has a piston (72, 142) on the end away from the injector needle outlet (64, 134, 164), and that the fluid injector (50, 120, 150) has a hydraulic or pneumatic cylinder (73, 143) in which the piston (72, 142) is displaceably guided.

11. Method of producing hollow bodies by means of fluid-injection technology with a fluid injector according to one of the previous claims, **characterised in that** a gaseous first fluid and a liquid second fluid generate a multi-phase mixture in the form of an atomised mist using the principle of a venturi nozzle, and that the mist is introduced into a still-fluid moulding material, whereby a cavity is created in the moulding material or the moulding material is cooled.

## Revendications

1. Injecteur de fluide pour la fabrication de corps creux par la technique d'injection de fluide, par lequel un mélange multiphasique est introduit sous forme de brouillard atomisé dans une matière à mouler encore apte à s'écouler, ce qui crée dans la matière à mouler une cavité par refoulement de la matière à mouler et/ou refroidit la matière à mouler, avec un corps d'injecteur (12, 32, 52, 122, 172),
avec un dispositif de fixation (13, 33, 53, 123, 173) disposé sur une face extérieure du corps d'injecteur, permettant de fixer l'injecteur de fluide (10, 30, 50, 120, 150, 170) à un outil de moulage (11, 31, 51, 121, 171),
avec un conduit de corps d'injecteur allongé (14, 34, 54, 124, 174) ménagé dans le corps d'injecteur (12, 32, 52, 122, 172),
avec une entrée de corps d'injecteur (16, 36, 56, 126, 176) par laquelle un premier fluide gazeux ou liquide peut être introduit dans le conduit de corps d'injecteur (14, 34, 54, 124, 174),
avec une sortie de corps d'injecteur (17, 37, 57, 127, 177) par laquelle le premier fluide s'écoule du conduit de corps d'injecteur (14, 34, 54, 124, 174),
avec une aiguille d'injecteur (15, 35, 55, 125, 155, 175) disposée dans le conduit de corps d'injecteur (14, 34, 54, 124, 174), dont le diamètre extérieur est inférieur au diamètre intérieur du conduit de corps d'injecteur (14, 34, 54, 124, 174), un interstice annulaire dans lequel passe le premier fluide étant formé entre le corps d'injecteur (12, 32, 52, 122, 172) et l'aiguille d'injecteur (15, 35, 55 125, 175),
avec un conduit d'aiguille d'injecteur allongé (19, 39, 59, 129, 159, 179) qui s'étend dans l'aiguille d'injecteur (15, 35, 55, 125, 155, 175) dans le sens longitudinal,
avec une entrée d'aiguille d'injecteur (22, 42, 62, 132, 182) par laquelle un second fluide liquide ou gazeux dont l'état physique diffère de celui du premier fluide peut être introduit dans le conduit d'aiguille d'injecteur (19, 39, 59, 129, 159, 179),
avec une sortie d'aiguille d'injecteur (24, 44, 64, 134, 164, 184) par laquelle le second fluide s'écoule en même temps que le premier fluide s'écoule de la sortie de corps d'injecteur (17, 37, 57, 127, 177), formant avec le premier fluide un mélange multiphasique sous forme de brouillard atomisé pouvant être introduit par l'injecteur de fluide (10, 30, 50, 120, 150, 170) dans une matière à mouler apte à s'écouler,
**caractérisé en ce qu'**une première conduite d'amenée (20, 40, 60, 90, 130, 180) pour le premier fluide est couplée à l'entrée de corps d'injecteur (16, 36, 56, 126, 176) et **en ce qu'**une seconde conduite d'amenée (23, 43, 63, 93, 133, 183) pour le second fluide est couplée à l'entrée d'aiguille d'injecteur (22, 42, 62, 132, 182), la conduite d'amenée du premier et/ou du second fluide étant doté d'un dispositif de dosage.

2. Injecteur de fluide selon la revendication 1, **caractérisé en ce que** la sortie d'aiguille d'injecteur (24, 44, 64, 134, 164, 184) présente un rétrécissement de section.

3. Injecteur de fluide selon la revendication 1 ou 2, **caractérisé en ce que** le conduit de corps d'injecteur (14, 34, 54, 124, 174) présente un rétrécissement de section au niveau de la sortie de corps d'injecteur.

4. Injecteur de fluide selon la revendication 1, 2 ou 3, **caractérisé en ce que** la sortie d'aiguille d'injecteur (134, 164, 184) présente une ou plusieurs buses.

5. Injecteur de fluide selon l'une quelconque des revendications précédentes, **caractérisé en ce que** l'aiguille d'injecteur (15) présente au niveau de la sortie d'aiguille d'injecteur un matériau à cellules ouvertes ou à porosité ouverte.

6. Injecteur de fluide selon l'une quelconque des revendications précédentes, **caractérisé en ce que** l'aiguille d'injecteur (15, 35, 55, 125, 155) est disposée de façon coulissante dans le sens longitudinal dans le conduit de corps d'injecteur (14, 34, 54, 124).

7. Injecteur de fluide selon l'une quelconque des revendications précédentes, **caractérisé en ce que** l'aiguille d'injecteur (15, 35, 55, 125, 175) présente une aiguille obturatrice (45, 65, 135, 165) disposée de façon coulissante dans le sens longitudinal dans le conduit d'aiguille d'injecteur.

8. Injecteur de fluide selon la revendication 7, **caractérisé en ce que** l'aiguille obturatrice (45, 65, 135, 165) présente une première partie cylindrique dont le diamètre extérieur est inférieur au diamètre intérieur du canal d'aiguille d'injecteur (39, 59, 129, 159), un interstice annulaire étant formé entre l'aiguille d'injecteur (35, 55, 125, 155) et l'aiguille obturatrice (45, 65, 135, 165), et **en ce que** l'aiguille obturatrice (45, 65, 135, 165) présente une seconde partie ayant la forme d'un corps de fermeture (48, 68, 138, 168) qui, en position fermée, obture la sortie d'aiguille d'injecteur (44, 64, 134, 164).

9. Injecteur de fluide selon la revendication 7 ou 8, **caractérisé en ce que** l'aiguille obturatrice (135) présente une partie cylindrique au niveau de la pointe, et **en ce que** le conduit d'aiguille d'injecteur (129) présente une partie cylindrique correspondante qui, en position fermée de l'aiguille obturatrice (135), est obturée par la partie cylindrique de l'aiguille obturatrice (135).

10. Injecteur de fluide selon l'une quelconque des revendications précédentes, **caractérisé en ce que** l'aiguille d'injecteur (55, 125, 155) est dotée d'un piston (72, 142) à son extrémité opposée à la sortie d'aiguille d'injecteur (64, 134, 164), et **en ce que** l'injecteur de fluide (50, 120, 150) présente un vérin pneumatique ou hydraulique (73, 143) dans lequel le piston (72, 142) est guidé de façon coulissante.

11. Procédé de fabrication de corps creux par la technique d'injection de fluide comprenant un injecteur de fluide selon l'une quelconque des revendications précédentes, **caractérisé en ce qu'**un mélange multiphasique est créé sous forme de brouillard atomisé à partir d'un premier fluide gazeux et d'un second fluide liquide par l'application du principe de fonctionnement d'une buse Venturi, et **en ce que** ledit brouillard est introduit dans une matière à mouler encore apte à s'écouler, créant dans la matière à mouler une cavité par refoulement de la matière à mouler ou refroidissant la matière à mouler.
